# EUROPEAN PATENT SPECIFICATION

(11) **EP 1 816 803 B1**
(45) Date of publication and mention of the grant of the patent: **05.05.2010**
(21) Application number: 06742177.6
(22) Date of filing: 15.06.2006
(51) Int. Cl.: H04L 12/56

(54) **TRANSMISSION PROCESSING METHOD FOR DATA FRAME AND SYSTEM THEREOF**
ÜBERTRAGUNGSVERARBEITUNGSVERFAHREN FÜR EINEN DATENRAHMEN UND SYSTEM HIERFÜR
PROCÉDÉ DE TRAITEMENT DE TRANSMISSION POUR TRAME DE DONNÉES ET SYSTÈME DE CELUI-CI

(30) Priority: 27.07.2005 CN 200510087196
(43) Date of publication of application: 08.08.2007
(73) Proprietor: Huawei Technologies Co., Ltd., Longgang District Shenzhen 518129 (CN)
(72) Inventor: JIANG, Zhangzhen, 18129 Shenzhen Guangdong (CN)
(74) Representative: Körber, Martin Hans
(86) International application number: PCT/CN2006/001345
(87) International publication number: WO 2007/012245

(56) References cited:
- EP-A- 1 505 783
- CN-A- 1 426 204
- CN-A- 1 509 023
- GB-A- 2 398 699
- GB-A- 2 398 699
- CARLSON SUN MICROSYSTEMS J: "PPP Link Balancing Detection (LBD); draft-ietf-pppext-lbd-03.txt;" IETF STANDARD-WORKING-DRAFT, INTERNET ENGINEERING TASK FORCE, IETF, CH, vol. pppext, no. 3, July 2001 (2001-07), XP015025631 ISSN: 0000-0004
- ANDREW G MALIS VIVACE NETWORKS W MARK TOWNSLEY CISCO SYSTEMS: "PWE3 Fragmentation and Reassembly; draft-ietf-pwe3-fragmentation-00.txt" IETF STANDARD-WORKING-DRAFT, INTERNET ENGINEERING TASK FORCE, IETF, CH, vol. pwe3, October 2002 (2002-10), XP015003155 ISSN: 0000-0004
- SIMPSON W: "The Point-to-Point Protocol (PPP), RFC 1661" NETWORK WORKING GROUP REQUEST FOR COMMENTS, 1 July 1994 (1994-07-01), pages 1-54, XP002324214
- SKLOWER UNIVERSITY OF CALIFORNIA K ET AL: "The PPP Multilink Protocol (MP); rfc1990.txt" IETF STANDARD, INTERNET ENGINEERING TASK FORCE, IETF, CH, August 1996 (1996-08), XP015007774 ISSN: 0000-0003
- "Generic framing procedure (GFP); G.7041/Y.1303 (12/03)" ITU-T STANDARD SUPERSEDED (S), INTERNATIONAL TELECOMMUNICATION UNION, GENEVA,, CH, no. G7041/Y1303 12/3, 14 December 2003 (2003-12-14), XP017404564

## Description

### Field of the Invention

The present invention relates to data frame transmission technology in communication systems, and particularly, to a method and an apparatus for data frame transmission by confining the size of a data frame to a Maximum Transmission Unit (MTU).

### Background of the invention

In order to fully utilize existing Synchronous Optical Network (SONET)/Synchronous Digital Hierarchy (SDH) and Optical Transmission Network (OTN), telecommunication operators usually map data of various upper layer services (e.g., Ethernet, Internet Protocol/Point-to-Point Protocol (IP/PPP), Multi-Protocol Label Switching (MPLS), etc.) to the SONET/SDH and OTN for transmission through a Generic Framing Procedure (GFP).

The GFP is put forward by the Telecommunication Standardization Sector of International Telecommunications Union (ITU-T), and the detailed description of the GFP is given in the ITU-T G7041/Y.1303. The transmission scheme of the GFP is explained hereinafter.

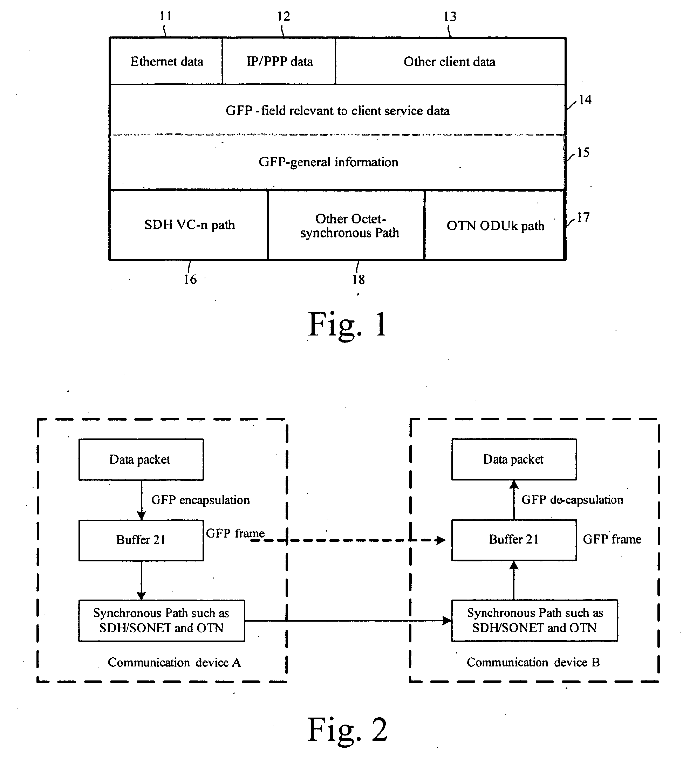

Fig. 1 shows the structure of a GFP protocol stack. As shown in Fig. 1, the data frame defined by the GFP is able to carry Ethernet Data 11, IP/PPP Data 12 and upper layer client service data 13 employing other protocols. The GFP frame also includes a field relevant to the upper layer client service data, e.g., payload header14, and includes a general information field 15, e.g., core header, which is not related to the upper layer client service data; transmission paths available for the GFP frame include: SDH Virtual Container Path (SDH VC-n Path) 16, OTN Optical channel Data Unit Path (OTN ODUk Path) 17, and other octet-synchronous paths 18.

Fig. 2 shows a process of data packet transmission in a communication system employing GFP. As shown in Fig. 2, in a data communication device, each synchronous path has a corresponding buffer 21. The upper layer service data packet to be transmitted, e.g., an Ethernet data packet or a PPP data packet, is encapsulated into a GFP frame by a GFP module (Fig. 2 is a simplified schematic diagram, and the GFP module is not shown) at the source (e.g., communication device A), and retrieved from the GFP frame by a de-capsulation process at a sink (e.g., communication device B) to obtain the original upper layer service data packet. When the communication device A sends the GFP frame through the synchronous path, the GFP frame is put into the buffer 21 of the synchronous path first, then the GFP frame is read from the buffer 21 sequentially and send through the synchronous path. Similarly, when the communication device B receives the GFP frame through the synchronous path, the GFP frame is put into the buffer 21 of the synchronous path first, then retrieved from the buffer 21 by an upper layer application module and de-capsulated. Therefore, the size of the GFP frame is limited by the size of the buffer 21, and the buffer 21 must have a capacity of at least one GFP frame. Generally, a Maximum Transmission Unit (MTU) of the transmission path is set according to the size of the buffer 21, the MTU is used for identifying the maximum length of the payload of the GFP frame that can be sent or received by the communication device, i.e., the GFP frame can be put into the buffer 21 only when the payload length of the GFP frame is smaller than or equal to the MTU.

However, for the same transmission path, if the MTU of the source is larger than that of the sink, the payload length of the GFP frame sent from the source may very possibly be larger than the MTU of the sink, which makes it impossible for the buffer of the sink to hold the GFP frame, so that the GFP frame will be discarded and the data is lost. If the MTU of the source is much larger than that of the sink, there is a very high possibility that the payload length of the GFP frame from the source is larger than the MTU of the sink, which will cause very serious loss of frame at the sink.

"PPP Link Balancing Detection (LBD) draft-ietf-pppext-lbd-03.txt" (Carlson Sun Microsystems, January 2002) provides a standard method for transporting multi-protocol datagrams over point-to-point links. In this document, the MTU is calculated as the minimum of the peer's MRU and MRRU if the No-MP-Headers option is used.

UK patent application GB 2 398 699A provides a method of routing information in a data network. The method comprises the steps of transmitting a test data packet from a source node to a destination node via a number of intermediate nodes, wherein the test data packet contains a first MTU value. Each intermediate node compares the first MTU value to a second MTU value applicable to itself, and replace the first MTU with the second MTU if the second MTU is lower than the first MTU.

The Point-to-Point Protocol (PPP), RFC 1661 , introduces one of the LCP configuration options, Maximum-receive-unit (MRU).The MRU is used to indicate an implementation capability, it inform the peer that the implementation can receive larger packets, or it request that peer send smaller packets. The default of the MRU is 1500 octets. When a MRU indicates a value of 2048, the peer is not required to send any packet with 2048 octets; when a MRU indicates a value less than 1500, the peer need not Configure-Nak to indicate it will only send smaller packets, since the implementation will always require support for at least 1500 octets.

### Summary of the invention

Embodiments of the present invention provide a method for data frame transmission, which prevents loss of frame during data transmission caused by a Maximum Transmission Unit (MTU) difference between a transmitting device and a receiving device.

Embodiments of the present invention also provide an apparatus for data frame transmission, which prevents loss of frame during data transmission caused by a MTU difference between a transmitting device and a receiving device.

According to one embodiment of the present invention, the method for data frame transmission includes:
sending, by a sink, a Maximum Transmission Unit (MTU) of the sink to a source initiatively when a connection between the source and the sink is established, wherein the MTU of the sink is used for identifying the maximum length of the payload of a data frame sent or received by the sink, the MTU of the sink is carried in a Generic Framing Procedure GFP control frame or a Generic Framing Procedure GFP client management frame;
determining, by the source, whether an MTU of the source is larger than the MTU of the sink, if the MTU of the source is larger than the MTU of the sink, taking the MTU of the sink as a threshold to send the data frame; otherwise, taking the MTU of the source as the threshold to send the data frame, wherein the MTU of the source is used for identifying the maximum length of the payload of the data frame sent or received by the source.

An apparatus for data frame transmission includes:
an MTU processing unit, configured to receive a first MTU from a sink of the frame transmission, determine whether a second MTU of the apparatus is larger than the first MTU, determine the first MTU being a threshold if the second MTU is larger than the first MTU; wherein the first MTU is sent by the sink initiatively when a connection between the apparatus and the sink is established, wherein the first MTU or the second MTU are used for identifying the maximum length of the payload of a data frame sent or received by the sink or the apparatus, the first MTU is carried in a Generic Framing Procedure GFP control frame or a Generic Framing Procedure GFP client management frame;
a data frame encapsulation unit, configured to encapsulate an upper layer data packet into a data frame according to the threshold determined by the MTU processing unit;
a buffer, configured to buffer the data frame encapsulated by the data frame encapsulation unit;
a transmission path, configured to send the data frame in the buffer.

In the method and apparatus provided by the embodiments of the present invention, the source obtains the MTU of the sink, when the MTU of the sink is smaller than that of the source, the source takes the MTU of the sink as the threshold for data frame transmission to ensure that the payload length of the data frame sent to the sink does not exceed the MTU of the sink, and therefore the frame loss at the sink caused by the difference between the MTUs of the source and sink is prevented.

Moreover, an upper layer of the source in the embodiments of the present invention may limit the length of the upper layer service data packet according to the MTU threshold so that the payload length of the encapsulated data frame will not exceed the MTU threshold, thus the embodiment of the present invention further solves the problem of packet loss at the source.

### Brief Description of the Drawings

Fig. 1 is a schematic diagram illustrating the structure of a GFP protocol stack according to the related art.
Fig. 2 is a schematic diagram illustrating a process of data packet transmission in a communication system employing GFP.
Fig. 3 is a flow chart illustrating a process of data frame transmission according to an embodiment of the present invention.
Fig. 4 is a schematic diagram illustrating a first method to obtain the MTU of the sink according to an embodiment of the present invention.
Fig. 5 is a schematic diagram illustrating a second method to obtain the MTU of the sink according to an embodiment of the present invention.
Fig. 6 is a schematic diagram illustrating a third method to obtain the MTU of the sink according to an embodiment of the present invention.
Fig. 7 is a schematic diagram illustrating an apparatus for data frame transmission according to an embodiment of the present invention.

### Embodiments of the Invention

The present invention will be described in detail hereinafter with reference to accompanying drawings and embodiments.

The method provided by the embodiments of the present invention is applicable to communication systems similar to Fig. 2, which employ a buffer to transmit data frames. A description of an embodiment of the present invention is provided hereinafter, taking a communication system employing GFP as an example.

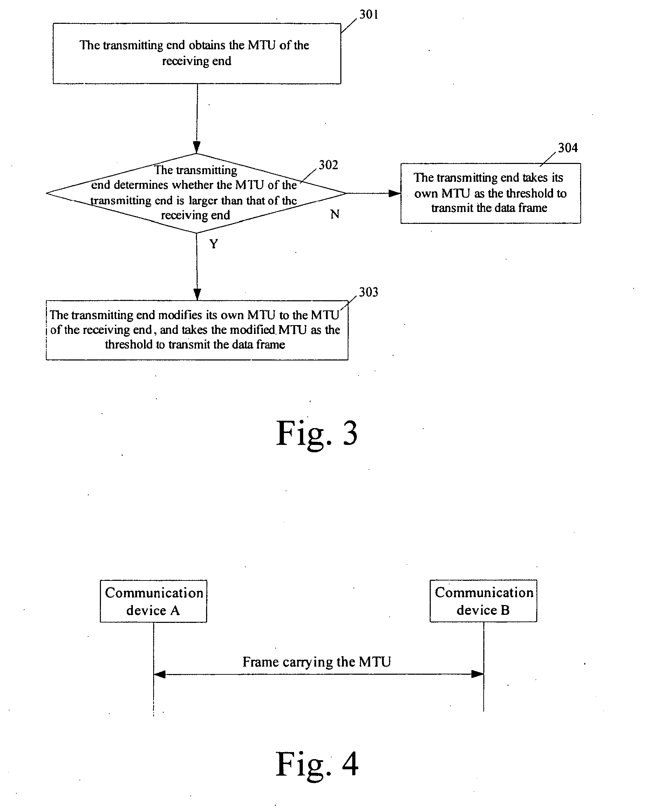

Fig. 3 is a flowchart of a process of data frame transmission according to an embodiment of the present invention. As shown in Fig. 3, the process includes:
Step 301: when a connection is established or after the connection is established, a source obtains the MTU of a sink. The MTU in the embodiment of the present invention refers to the maximum length of a data frame that can be received by a synchronous path of a communication device, and the MTU may be determined according to the size of the buffer of the synchronous path following existing method. Specifically to the GFP, the MTU is the maximum length of the payload of the GFP frame sent or received by the communication device.
Step 302: the source determines whether the MTU of the source is larger than the MTU of the sink, if the MTU of the source is larger than the MTU of the sink, proceed to Step 303; otherwise, proceed to Step 304.
Step 303: the source modifies the MTU of the source to the MTU of the sink and takes the modified MTU as a threshold to send the data frame. In the case of a GFP frame, the source determines whether the length of the payload encapsulated in the GFP frame is larger than the MTU of the sink, if the length of the payload encapsulated in the GFP frame is larger than the MTU of the sink, stops transmitting the GFP frame and sends an indication to the upper layer of the source (e.g., the Ethernet layer or PPP layer) indicating the length is overlarge. Upon the receipt of the indication, the upper layer of the source acquires the modified MTU and limits the length of the client service data packet according to the modified MTU to make sure that the length of the payload encapsulated in the GFP frame is within the threshold. The step of limiting the length of the client service data packet may be implemented through the existing fragment/concatenation method. If the length of the payload encapsulated in the GFP frame is smaller than or equal to the MTU of the sink, buffer and transmit the GFP frame, then the procedure ends.
   After the source modifies the MTU of the source to that of the sink, the source may also send directly the modified MTU to the upper layer. The upper layer limits the length of the client service data packet according to the modified MTU to make sure that the length of the payload encapsulated in the GFP frame is within the modified MTU. Therefore the upper layer may control the length of the client service data packet and reduce the risk of packet loss at the source.
Step 304: the source sends the data frame taking the MTU of the source as the threshold, i.e., the source determines whether the length of the payload encapsulated in GFP frame is larger than the MTU of the source, if the length of the payload encapsulated in GFP frame is larger than the MTU of the source, stops transmitting the GFP frame, and sends an indication to the upper layer of the source indicating that the length is overlarge. Upon the receipt of the indication, the upper layer of the source limits the length of the client service data packet according to the MTU of the source to make sure that the length of the payload encapsulated in the GFP frame is within the MTU of the source; otherwise, buffer and transmit the GFP frame, and end the procedure.

In Step 301, there are several methods for the source to obtain the MTU of the sink; three of them are explained hereinafter.

Fig. 4 is a schematic diagram illustrating a first method to obtain the MTU according to an embodiment of the present invention. As shown in Fig. 4, in the first method, when the connection is established or after the connection is established, the source and the sink (e.g., the communication device A and the communication device B in Fig. 4) send, initiatively and respectively, a frame carrying their respective MTU to each other. The MTU may be carried by a GFP control frame. The value of the Payload Length Indicator (PLI) of the header of the GFP control frame may be set to A, indicating that the GFP control frame carries an MTU. Where A may be 1, 2, or 3, and is saved in the communication device in advance. The MTU may be encapsulated in a designated field in the payload of the GFP control frame, and the location information of the designated field is also saved in the communication device in advance. Upon the receipt of the GFP frame, the peer side analyzes the header of the GFP frame, and if the value of the PLI of the header of the GFP frame is A, determines that the GFP frame is a GFP control frame carrying MTU, and extracts the MTU from the designated field in the payload of the GFP control frame to obtain the MTU. The MTU may also be carried by a GFP client management frame. The value of the User Payload Indicator (UPI) of the GFP client management frame may be set to B, indicating that the GFP client management frame carries an MTU; where B may be any value within the range of the UPI except 1 and 2, and is saved in the communication device in advance. The MTU is encapsulated in the header extension of the GFP client management frame, and a new field may be designated to carry the MTU to avoid confliction with other existing fields. Upon the receipt of the GFP client management frame, the peer side analyzes the value of the UPI, and if the value of the UPI is B, the peer side determines that the GFP client management frame carries an MTU and then analyzes the header extension of the GFP client management frame to obtain the MTU.

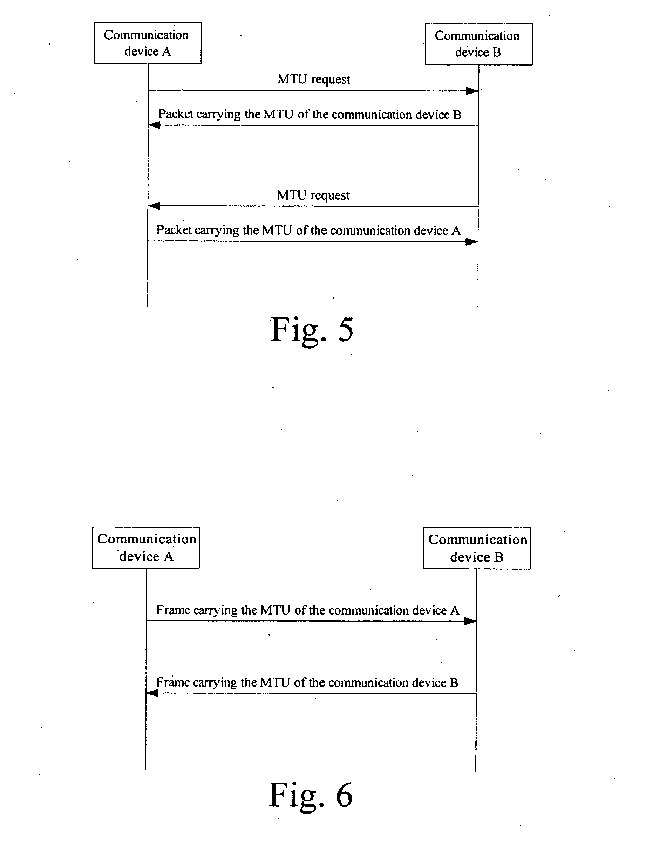

Fig. 5 is a schematic diagram illustrating a second method to obtain the MTU according to an embodiment of the present invention. As shown in Fig. 5, when the connection is established or after the connection is established, the source and the sink, e.g., the communication device A and the communication device B, respectively sends an MTU request to each other. Upon the receipt of the MTU request, the source and the sink respectively carries its own MTU in a packet and sends the packet in response to the MTU request. Upon the receipt of the packet and after successfully extracting the MTU from the packet, the source and the sink respectively send a response packet to each other. If the source or the sink fails to receive the packet or extract the MTU from the packet, the source or the sink sends an MTU request again after a period of time. The MTU request and the response packet may be specific GFP control frames, and may be identified by the PLI of the header of the GFP control frame. The packet carrying the MTU may be a GFP control frame or a GFP client management frame. The implementation is the same as that in the first method.

Fig. 6 is a schematic diagram illustrating a third method to obtain the MTU according to an embodiment of the present invention. As shown in Fig. 6, when the connection is established or after the connection is established, one of the source and the sink, e.g., the communication device A, carries its own MTU in a packet and sends the packet to the communication device B. Upon the receipt the packet, the communication device B carries its own MTU in another packet and sends the packet in response to the packet from the communication device A. The packet carrying the MTU may be a GFP control frame or a GFP client management frame. The implementation is the same as that in the first method.

In addition, in Step 301, the source may obtain the MTU of the sink regularly, or upon a trigger, e.g., when the synchronous path is launched again after being closed, the source may be triggered to obtain the MTU of the sink.

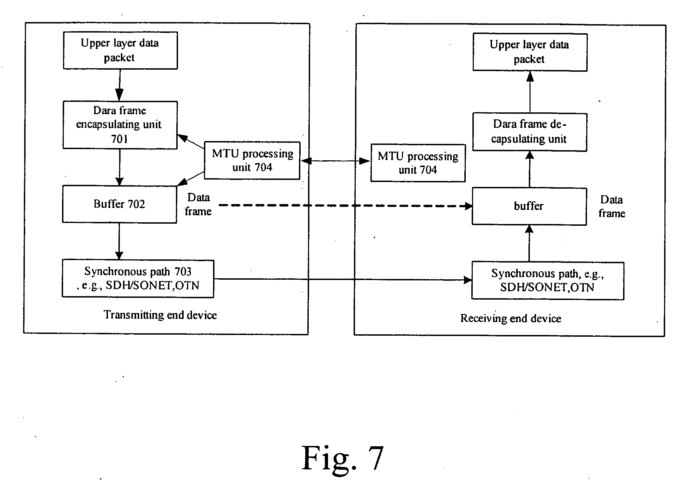

Fig. 7 is a schematic diagram illustrating the apparatus of the data frame transmission according to an embodiment of the present invention. As shown in Fig. 7, the apparatus of data frame transmission includes:
an MTU processing unit 704, configured to obtain the MTU of the sink, determine whether the MTU of the source is larger than the MTU of the sink, if the MTU of the source is larger than the MTU of the sink, determine the MTU of the sink to be a threshold;
a data frame encapsulation unit 701, configured to encapsulate an upper layer data packet into a data frame according to the threshold determined by the MTU processing unit 704; specifically in the embodiment of the present invention, the data frame encapsulation unit 701 may be a GFP module configured to encapsulate the upper layer data packet into a GFP frame;
a buffer 702, configured to buffer the data frame encapsulated by the data frame encapsulation unit 701;
a transmission path 703, configured to read the data frame from the buffer 702 and send the data frame; the transmission path 703 may be a synchronous transmission path such as SDH/SONET and OTN;

Preferably, when the MTU of the source is larger than that of the sink, the MTU processing unit 704 is further configured to inform, upon the receipt of the MTU of the sink, the data frame encapsulation unit 701 to encapsulate the data frame according to the MTU of the sink.

The MTU processing unit 704 is equipped on both the source and the sink. Since the communication is a bidirectional process, the source is also equipped with modules identical to those of the sink, and vice versa. Fig. 7 only shows a unidirectional communication for simplicity, those skilled in the art should understand that the communication devices on both sides include the modules provided by the embodiment of the present invention. When the connection is established or after the connection is established, the MTU processing unit 704 on both sides of the communication devices initiatively sends their respective MTU to each other. Or, the MTU processing unit 704 on both sides of the communication devices respectively sends an MTU request to each other requesting the MTU of the peer side; upon the receipt of the MTU request, the MTU processing unit of the peer side sends its own MTU in response to the MTU request; or, the MTU processing unit 704 on either side of the communication devices sends its own MTU to the MTU processing unit 704 of the peer side, and the peer side sends the MTU of the peer side in response.

The MTU may be carried by the GFP control frame. The MTU may be carried in a designated field of payload of the GFP control frame, and the PLI of the header of the GFP control frame may be 1, 2 or 3.

The MTU may also be carried by the GFP client management frame. The MTU is carried in the header extension of the GFP client management frame.

The foregoing is only preferred embodiments of this invention. The protection scope of this invention, however, is not limited to the above description. Any change or substitution, within the technical scope disclosed by this invention, easily occurring to those skilled in the art should be covered by the protection scope of this invention.

## Claims

1. A method for data frame transmission, **characterized by** comprising:
sending, by a sink, a Maximum Transmission Unit MTU of the sink to a source initiatively when a connection between the source and the sink is established (301), wherein the MTU of the sink is used for identifying the maximum length of the payload of a data frame sent or received by the sink, the MTU of the sink is carried in a Generic Framing Procedure GFP control frame or a Generic Framing Procedure GFP client management frame;
determining, by the source, whether an MTU of the source is larger than the MTU of the sink (302), if the MTU of the source is larger than the MTU of the sink, taking the MTU of the sink as a threshold to send the data frame (303); otherwise, taking the MTU of the source as the threshold to send the data frame (304), wherein the MTU of the source is used for identifying the maximum length of the payload of the data frame sent or received by the source.

2. The method of claim 1, wherein the MTU of the sink is carried in a designated field in payload of the GFP control frame; and the value of a Payload Length Indicator PLI of a header of the GFP control frame indicates that the GFP control frame carries the MTU of the sink.

3. The method of claim 2, wherein the value of the PLI of the header of the GFP control frame is 1, 2, or 3.

4. The method of claim 2 or 3, further comprising:
saving, by the source, the value of the PLI of the header of the GFP control frame and location information of the designated field of the GFP control frame in advanced.

5. The method of claim 4, further comprising:
determining, by the source, that the GFP control frame is the GFP control frame carrying the MTU of the sink according to the value of the PLI of the header of the GFP control frame;
extracting, by the source, the MTU of the sink from the designated field in the payload of the GFP control frame according to the location information of the designated field of the GFP control frame.

6. The method of claim 1, wherein the MTU of the sink is carried in header extension of the GFP client management frame, the value of the User Payload Indicator UPI of the GFP client management frame indicates that the GFP client management frame carries the MTU of the sink.

7. The method of claim 6, wherein the value of the UPI of the GFP client management frame is lor 2.

8. The method of claim 6 or 7, further comprising:
saving, by the source, the value of the UPI of the GFP client management frame in advance.

9. The method of claim 8, further comprising:
determining, by the source, the GFP client management frame is the GFP client management frame carrying the MTU of the sink according to the value of the UPI of the GFP client management frame;
obtaining, by the source, the MTU of the sink from the header extension of the GFP client management frame.

10. The method of claim 1, further comprising:
if the MTU of the source is larger than the MTU of the sink, limiting, by upper layer of the source, the length of an upper layer service data packet to the MTU of the sink.

11. The method of claim 1, wherein the process of taking the MTU of the sink as a threshold to send a data frame comprises:
determining whether the length of payload encapsulated in the data frame is larger than the MTU of the sink, if the payload length encapsulated in the data frame is larger than the MTU of the sink, stopping transmitting the data frame, and sending an indication to the upper layer of the source indicating that the length is overlarge; otherwise, buffering and transmitting the data frame.

12. The method of claim 11, further comprising:
upon the receipt of the indication, limiting, by the upper layer of the source, the length of the upper layer service data packet according to the MTU of the sink.

13. An apparatus for data frame transmission, **characterized by** comprising:
a Maximum Transmission Unit MTU processing unit (704), configured to receive a first MTU from a sink of the frame transmission, determine whether a second MTU of the apparatus is larger than the first MTU, and determine the first MTU to be a threshold if the second MTU is larger than the first MTU; wherein the first MTU is sent by the sink initiatively when a connection between the apparatus and the sink is established, wherein the first MTU or the second MTU are used for identifying the maximum length of the payload of a data frame sent or received by the sink or the apparatus, the first MTU is carried in a Generic Framing Procedure GFP control frame or a Generic Framing Procedure GFP client management frame ;
a data frame encapsulation unit (701), configured to encapsulate an upper layer data packet into a data frame according to the threshold determined by the MTU processing unit (704);
a buffer(702), configured to buffer the data frame encapsulated by the data frame encapsulation unit (701);
a transmission path (703), configured to send the data frame in the buffer (702).

14. The apparatus of claim 13, wherein the MTU processing unit (704) is further configured to inform the data frame encapsulation unit (701) to replace the second MTU by the first MTU to encapsulate the upper layer data packet when the second MTU is larger than the first MTU.

15. The apparatus of claim 13, wherein the first MTU is carried in a designated field in payload of the GFP control frame; and the value of a Payload Length Indicator PLI of header of the GFP control frame indicates that the GFP control frame carries the MTU of the sink.

16. The apparatus of claim 15, further comprising:
means for saving the value of the PLI of the header of the GFP control frame and location information of the designated field of the GFP control frame in advanced.

17. The apparatus of claim 16, further comprising:
means for determining that the GFP control frame is the GFP control frame carrying the MTU of the sink according to the value of the PLI of the header of the GFP control frame;
means for extracting the MTU of the sink from the designated field in the payload of the GFP control frame according to the location information of the designated field of the GFP control frame.

18. The apparatus of claim 13, wherein the first MTU is carried in header extension of the GFP client management frame, the value of the User Payload Indicator UPI of the GFP client management frame indicates that the GFP client management frame carries the MTU of the sink.

19. The apparatus of claim 18, further comprising:
means for saving the value of the UPI of the GFP client management frame in advance.

20. The apparatus of claim 19, further comprising:
means for determining the GFP client management frame is the GFP client management frame carrying the MTU of the sink according to the value of the UPI of the GFP client management frame;
means for obtaining the MTU of the sink from the header extension of the GFP client management frame.

## Patentansprüche

1. Verfahren zur Datenrahmenübertragung, **gekennzeichnet durch** die folgenden Schritte:
eine Senke sendet eine maximale Übertragungseinheit MTU der Senke initiativ zu einer Quelle, wenn eine Verbindung zwischen der Quelle und der Senke hergestellt wird (301), wobei die MTU der Senke zum Identifizieren der maximalen Länge der Nutzinformationen eines **durch** die Senke gesendeten oder empfangenen Datenrahmens verwendet wird, und die MTU der Senke in einem Steuerrahmen der Generic Framing Procedure GFP oder einem Client-Verwaltungsrahmen der Generic Framing Procedure GFP geführt wird;
die Quelle bestimmt, ob eine MTU der Quelle größer als die MTU der Senke ist (302), wenn die MTU der Quelle größer als die MTU der Senke ist, wird die MTU der Senke als Schwelle zum Senden des Datenrahmens genommen (303); andernfalls wird die MTU der Quelle als die Schwelle zum Senden des Datenrahmens genommen (304), wobei die MTU der Quelle zum Identifizieren der maximalen Länge der Nutzinformationen des **durch** die Quelle gesendeten oder empfangenen Datenrahmens verwendet wird.

2. Verfahren nach Anspruch 1, wobei die MTU der Senke in einem designierten Feld in Nutzinformationen des GFP-Steuerrahmens geführt wird; und der Wert eines Payload Length Indicator PLI eines Kopfteils des GFP-Steuerrahmens angibt, dass der GFP-Steuerrahmen die MTU der Senke führt.

3. Verfahren nach Anspruch 2, wobei der Wert des PLI des Kopfteils des GFP-Steuerrahmens 1, 2 oder 3 ist.

4. Verfahren nach Anspruch 2 oder 3, ferner mit dem folgenden Schritt:
die Senke speichert den Wert des PLI des Kopfteils des GFP-Steuerrahmens und Ortsinformationen des designierten Felds des GFP-Steuerrahmens im Voraus ab.

5. Verfahren nach Anspruch 4, ferner mit den folgenden Schritten:
die Quelle bestimmt, dass der GFP-Steuerrahmen der GFP-Steuerrahmen ist, der die MTU der Senke führt, gemäß dem Wert des PLI des Kopfteils des GFP-Steuerrahmens;
die Quelle extrahiert die MTU der Senke aus dem designierten Feld in den Nutzinformationen des GFP-Steuerrahmens gemäß den Ortsinformationen des designierten Felds des GFP-Steuerrahmens.

6. Verfahren nach Anspruch 1, wobei die MTU der Senke in einer Kopfteilerweiterung des GFP-Client-Verwaltungsrahmens geführt wird und der Wert des User Payload Indicator UPI des GFP-Client-Verwaltungsrahmens angibt, dass der GFP-Client-Verwaltungsrahmen die MTU der Senke führt.

7. Verfahren nach Anspruch 6, wobei der Wert des UPI des GFP-Client-Verwaltungsrahmens 1 oder 2 ist.

8. Verfahren nach Anspruch 6 oder 7, ferner mit dem folgenden Schritt:
die Quelle speichert den Wert des UPI des GFP-Client-Verwaltungsrahmens im Voraus ab.

9. Verfahren nach Anspruch 8, ferner mit den folgenden Schritten:
die Quelle bestimmt, dass der GFP-Client-Verwaltungsrahmen der GFP-Client-Verwaltungsrahmen ist, der die MTU der Senke führt, gemäß dem Wert des UPI des GFP-Client-Verwaltungsrahmens;
die Quelle erhält die MTU der Senke aus der Kopfteilerweiterung des GFP-Client-Verwaltungsrahmens.

10. Verfahren nach Anspruch 1, ferner mit dem folgenden Schritt:
die obere Schicht der Quelle begrenzt die Länge eines Dienstdatenpaketes der oberen Schicht auf die MTU der Senke, wenn die MTU der Quelle größer als die MTU der Senke ist.

11. Verfahren nach Anspruch 1, wobei der Prozess des Nehmens der MTU der Senke als Schwelle zum Senden eines Datenrahmens Folgendes umfasst:
Bestimmen, ob die Länge von in dem Datenrahmen eingekapselten Nutzinformationen größer als die MTU der Senke ist, wenn die in dem Datenrahmen eingekapselte Nutzinformationslänge größer als die MTU der Senke ist, Stoppen des Sendens des Datenrahmens und Senden einer Indikation zu der oberen Schicht der Quelle, die angibt, dass die Länge zu groß ist; andernfalls Puffern und Senden des Datenrahmens.

12. Verfahren nach Anspruch 11, ferner mit dem folgenden Schritt:
beim Empfang der Indikation begrenzt die obere Schicht der Quelle die Länge des Dienstdatenpakets der oberen Schicht gemäß der MTU der Senke.

13. Vorrichtung zur Datenrahmenübertragung, **dadurch gekennzeichnet, dass** sie Folgendes umfasst:
eine Verarbeitungseinheit (704) für die maximale Übertragungseinheit MTU, die dafür ausgelegt ist, eine erste MTU von einer Senke der Rahmenübertragung zu empfangen, zu bestimmen, ob eine zweite MTU der Vorrichtung größer als die erste MTU ist, und die erste MTU als eine Schwelle zu bestimmen, wenn die zweite MTU größer als die erste MTU ist; wobei die erste MTU initiativ durch die Senke gesendet wird, wenn eine Verbindung zwischen der Vorrichtung und der Senke hergestellt wird, wobei die erste MTU oder die zweite MTU zum Identifizieren der maximalen Länge der Nutzinformationen eines durch die Senke oder die Vorrichtung gesendeten oder empfangenen Datenrahmens verwendet wird und die erste MTU in einem Steuerrahmen der Generic Framing Procedure GFP oder einem Client-Verwaltungsrahmen der Generic Framing Procedure GFP geführt wird;
eine Datenrahmen-Einkapselungseinheit (701), die dafür ausgelegt ist, ein Datenpaket der oberen Schicht gemäß der durch die MTU-Verarbeitungseinheit (704) bestimmten Schwelle in einen Datenrahmen einzukapseln;
einen Puffer (702), der dafür ausgelegt ist, den durch die Datenrahmen-Einkapselungseinheit (701) eingekapselten Datenrahmen zu puffern;
einen Übertragungsweg (703), der dafür ausgelegt ist, den Datenrahmen in dem Puffer (702) zu senden.

14. Vorrichtung nach Anspruch 13, wobei die MTU-Verarbeitungseinheit (704) ferner dafür ausgelegt ist, die Datenrahmen-Einkapselungseinheit (701) zu informieren, die zweite MTU durch die erste MTU zu ersetzen, um das Datenpaket der oberen Schicht einzukapseln, wenn die zweite MTU größer als die erste MTU ist.

15. Vorrichtung nach Anspruch 13, wobei die erste MTU in einem designierten Feld in Nutzinformationen des GFP-Steuerrahmens geführt wird; und der Wert eines Payload Length Indicator PLI des Kopfteils des GFP-Steuerrahmens angibt, dass der GFP-Steuerrahmen die MTU der Senke führt.

16. Vorrichtung nach Anspruch 15, ferner umfassend:
Mittel zum Abspeichern des Werts des PLI des Kopfteils des GFP-Steuerrahmens und von Ortsinformationen des designierten Felds des GFP-Steuerrahmens im Voraus.

17. Vorrichtung nach Anspruch 16, ferner umfassend:
Mittel zum Bestimmen, dass der GFP-Steuerrahmen der GFP-Steuerrahmen ist, der die MTU der Senke führt, gemäß dem Wert des PLI des Kopfteils des GFP-Steuerrahmens;
Mittel zum Extrahieren der MTU der Senke aus dem designierten Feld in den Nutzinformationen des GFP-Steuerrahmens gemäß den Ortsinformationen des designierten Felds des GFP-Steuerrahmens.

18. Vorrichtung nach Anspruch 13, wobei die erste MTU in einer Kopfteilerweiterung des GFP-Client-Verwaltungsrahmens geführt wird und der Wert des User Payload Indicator UPI des GFP-Client-Verwaltungsrahmens angibt, dass der GFP-Client-Verwaltungsrahmen die MTU der Senke führt.

19. Vorrichtung nach Anspruch 18, ferner umfassend:
Mittel zum Abspeichern des Werts des UPI des GFP-Client-Verwaltungsrahmens im Voraus.

20. Vorrichtung nach Anspruch 19, ferner umfassend:
Mittel zum Bestimmen, dass der GFP-Client-Verwaltungsrahmen der GFP-Client-Verwaltungsrahmen ist, der die MTU der Senke führt, gemäß dem Wert des UPI des GFP-Client-Verwaltungsrahmens;
Mittel zum Erhalten der MTU der Senke aus der Kopfteilerweiterung des GFP-Client-Verwaltungsrahmens.

## Revendications

1. Procédé permettant la transmission de trames de données, **caractérisé en ce qu'**il comprend les étapes consistant à :
envoyer de manière préliminaire, grâce à un collecteur de données, une unité maximale en transmission, MTU, du collecteur de données vers une source lorsqu'est
établie (301) une connexion entre la source et le collecteur de données, l'unité MTU du collecteur de données étant utilisée pour identifier la longueur maximale de la charge utile d'une trame de données envoyée ou reçue par le collecteur de données, l'unité MTU du collecteur est transportée dans une trame de commande appartenant à la Procédure Générique d'Encadrement, GFP ou à une trame de gestion client selon la Procédure Générique d'Encadrement, GFP,
déterminer, grâce à la source, si une unité MTU de la source est plus grande que l'unité MTU du collecteur de données (302), si l'unité MTU de la source est plus grande que l'unité MTU du collecteur de données, prendre l'unité MTU du collecteur de données comme seuil pour envoyer la trame de données (303), sinon prendre l'unité MTU de la source comme seuil pour envoyer la trame de données (304), l'unité MTU de la source étant utilisée pour identifier la longueur maximale de la charge utile de la trame de données envoyée ou reçue par la source.

2. Procédé selon la revendication 1, dans lequel l'unité MTU du collecteur de données est transportée dans un champ désigné dans la charge utile de la trame de commande de procédure GFP, et la valeur d'un Indicateur de Longueur de Charge Utile, PLI d'un entête de la trame de commande de procédure GFP indique que la trame de commande de procédure GFP transporte l'unité MTU du collecteur de données.

3. Procédé selon la revendication 2, dans lequel la valeur de l'indicateur PLI de l'en-tête de la trame de commande de procédure GFP est 1, 2 ou 3.

4. Procédé selon la revendication 2 ou 3, comprenant en outre l'étape consistant à :
sauvegarder par avance, grâce à la source, la valeur de l'indicateur PLI de l'en-tête de la trame de commande de procédure GFP et les informations de localisation du champ désigné de la trame de commande de procédure GFP.

5. Procédé selon la revendication 4, comprenant en outre les étapes consistant à :
déterminer, grâce à la source, que la trame de commande de procédure GFP est la trame de commande de procédure GFP transportant l'unité MTU du collecteur de données en fonction de la valeur de l'indicateur PLI de l'en-tête de la trame de commande de procédure GFP,
extraire, grâce à la source, l'unité MTU du collecteur de données du champ désigné dans la charge utile de la trame de commande de procédure GFP en fonction des informations de localisation du champ désigné de la trame de commande de procédure GFP.

6. Procédé selon la revendication 1, dans lequel l'unité MTU du collecteur de données est transportée dans une extension de l'en-tête de la trame de gestion client de procédure GFP, la valeur de l'Indicateur de Charge Utile Utilisateur UPI de la trame de gestion client de procédure GFP indiquant que la trame de gestion client de procédure GFP transporte l'unité MTU du collecteur de données.

7. Procédé selon la revendication 6, dans lequel la valeur de l'indicateur UPI de la trame de gestion client de procédure GFP est 1 ou 2.

8. Procédé selon la revendication 6 ou 7, comprenant en outre l'étape consistant à :
sauvegarder à l'avance, grâce à la source, la valeur de l'indicateur UPI de la trame de gestion client de procédure GFP.

9. Procédé selon la revendication 8, comprenant en outre les étapes consistant à :
déterminer, grâce à la source, que la trame de gestion client de procédure GFP est la trame de gestion client de procédure GFP transportant l'unité MTU du collecteur de données en fonction de la valeur de l'indicateur UPI de la trame de gestion client de procédure GFP,
récupérer, grâce à la source, l'unité MTU du collecteur de données à partir de l'extension de l'en-tête de la trame de gestion client de procédure GFP.

10. Procédé selon la revendication 1, comprenant en outre l'étape consistant à :
limiter, si l'unité MTU de la source est plus grande que l'unité MTU du collecteur de données, et grâce à la couche supérieure de la source, la longueur d'un paquet de données de service de couche supérieure à l'unité MTU du collecteur de données.

11. Procédé selon la revendication 1, dans lequel l'opération consistant à prendre l'unité MTU du collecteur de données comme seuil pour envoyer une trame de données comprend l'étape consistant à :
déterminer si la longueur de la charge utile emballée dans la trame de données est plus grande que l'unité MTU du collecteur de données, si la longueur de la charge utile emballée dans la trame de données est plus grande que l'unité MTU du collecteur de données, arrêter la transmission de la trame de données et envoyer une indication à la couche supérieure de la source montrant que la longueur est trop importante, sinon, mettre en tampon et transmettre la trame de données.

12. Procédé selon la revendication 11, comprenant en outre l'étape consistant à :
limiter, à la réception de l'indication, et grâce à la couche supérieure de la source, la longueur du paquet de données de service de couche supérieure en fonction de l'unité MTU du collecteur de données.

13. Appareil permettant la transmission de trames de données, **caractérisé en ce qu'**il comprend :
une unité de traitement (704) d'unité maximale en transmission MTU, configurée pour recevoir une première unité MTU issue d'un collecteur de données de la transmission de trame, déterminer si une seconde unité MTU de l'appareil est plus grande que la première unité MTU et définir la première unité MTU comme étant un seuil si la seconde unité MTU est plus grande que la première unité MTU, la première unité MTU étant envoyée de manière préliminaire par le collecteur de données lorsqu'est établie une connexion entre l'appareil et le collecteur de données, la première unité MTU ou la seconde unité MTU étant utilisée pour identifier la longueur maximale de la charge utile d'une trame de données envoyée ou reçue par le collecteur de données ou par l'appareil, la première unité MTU est transportée dans une trame de commande de Procédure Générique d'Encadrement GFP ou dans une trame de gestion client de Procédure Générique d'Encadrement GFP,
une unité d'encapsulation de trame de données (701), configurée pour emballer le paquet de données de couche supérieure en une trame de données en fonction du seuil déterminé par l'unité de traitement d'unité MTU (704),
un circuit tampon (702), configuré pour mettre en tampon la trame de données emballée par l'unité d'encapsulation de trame de données (701),
une ligne de transmission (703) configurée pour envoyer la trame de données dans le circuit tampon (702).

14. Appareil selon la revendication 13, dans lequel l'unité de traitement d'unité MTU (704) est en outre configurée pour informer l'unité d'encapsulation de trame de données (701) de remplacer la seconde unité MTU par la première unité MTU afin d'emballer le paquet de données de couche supérieure lorsque la seconde unité MTU est plus grande que la première unité MTU.

15. Appareil selon la revendication 13, dans lequel la première unité MTU est transportée dans un champ désigné dans la charge utile de la trame de commande de procédure GFP, et la valeur d'un Indicateur de Longueur de Charge Utile PLI de l'en-tête de la trame de commande de procédure GFP indique que la trame de commande de procédure GFP transporte l'unité MTU du collecteur de données.

16. Appareil selon la revendication 15, comprenant en outre :
un moyen permettant de sauvegarder à l'avance la valeur de l'indicateur PLI de l'en-tête de la trame de commande de procédure GFP et les informations de localisation du champ désigné de la trame de commande de procédure GFP.

17. Appareil selon la revendication 16, comprenant en outre :
un moyen permettant de déterminer que la trame de commande de procédure GFP est la trame de commande de procédure GFP transportant l'unité MTU du collecteur de données en fonction de la valeur de l'indicateur PLI de l'en-tête de la trame de commande de procédure GFP,
un moyen permettant d'extraire l'unité MTU du collecteur de données à partir du champ désigné dans la charge utile de la trame de commande de procédure GFP en fonction des informations de localisation du champ désigné de la trame de commande de procédure GFP.

18. Appareil selon la revendication 13, dans lequel la première unité MTU est transportée dans une extension de l'en-tête de la trame de gestion client de procédure GFP, la valeur de l'Indicateur de Charge Utile Utilisateur UPI de la trame de gestion client de procédure GFP indiquant que la trame de gestion client de procédure GFP transporte l'unité MTU du collecteur de données.

19. Appareil selon la revendication 18, comprenant en outre :
un moyen permettant de sauvegarder à l'avance la valeur de l'indicateur UPI de la trame de gestion client de procédure GFP.

20. Appareil selon la revendication 19, comprenant en outre :
un moyen permettant de déterminer que la trame de gestion client de procédure GFP est la trame de gestion client de procédure GFP transportant l'unité MTU du collecteur de données en fonction de la valeur de l'indicateur UPI de la trame de gestion client de procédure GFP,
un moyen permettant de récupérer l'unité MTU du collecteur de données à partir de l'extension de l'en-tête de la trame de gestion client de procédure GFP.
